Europäisches Patentamt

European Patent Office

Office européen des brevets

(11) Veröffentlichungsnummer: **0 287 040**
**A2**

(12) ## EUROPÄISCHE PATENTANMELDUNG

(21) Anmeldenummer: 88105827.5

(22) Anmeldetag: 12.04.88

(51) Int. Cl.4: **F16S 5/00 , A47B 57/20 ,**
**B65D 39/00 , B65D 41/16 ,**
**G09F 7/04**

(30) Priorität: 14.04.87 DE 3712560

(43) Veröffentlichungstag der Anmeldung:
**19.10.88 Patentblatt 88/42**

(84) Benannte Vertragsstaaten:
**AT BE CH DE ES FR GB IT LI NL SE**

(71) Anmelder: **Keutner, Ernst**
**Josef-Schlicht-Strasse 6**
**D-8000 München 60(DE)**

(72) Erfinder: **Keutner, Ernst**
**Josef-Schlicht-Strasse 6**
**D-8000 München 60(DE)**

(74) Vertreter: **von Bezold, Dieter, Dr. et al**
**Dr. Dieter von Bezold Dipl.-Ing. Peter Schütz**
**Dipl.-Ing. Wolfgang Heusler Brienner Strasse**
**52**
**D-8000 München 2(DE)**

(54) **Halterungselement.**

(57) Es wird ein Halterungs-oder Griffelement beschrieben, das einen rohrförmigen, einseitig geschlossenen Mantel (12) aus Weich-Kuntstoff und
einen im Inneren des Mantels angeordneten Körper
aus Kork, Hartchaumstoff oder einem ähnlichen
Werkstoff enrhält. Am offenen Ende des Mantels
kann ein scheibenfürmiger Permanentmagnet (22)
oder eine Abschlußkappe angebracht sein.

## FIG. 1

EP 0 287 040 A2

## Halterungselement

Die vorliegende Erfindung betrifft ein Halterungs-und Griffelement, das sehr anpassungsfähig ist und sich für die verschiedensten Zwecke verwenden läßt.

Ein Halterungselement gemäß der Erfindung enthält einen rohrförmigen, zumindest einseitig geschlossenen Mantel oder Außenteil aus Weich-Kunststoff, z. B. Weich-PVC, und einen im Inneren des Mantels angeordneten Körper aus einem festeren Material, wie Kork oder Hartschaumstoff, das sich leicht schrauben, nageln, bohren oder bearbeiten läßt.

Ein solches "Grundelement" bestehend aus einem rohrförmigen, ein-oder zweiseitig geschlossenen Mantel oder Außenteil aus Weich-Kunststoff und einem im Inneren des Mantels, vorzugsweise im Preßsitz, angeordneten Körper aus einem festeren Material, wie Kork oder Hartschaumstoff, das sich leicht bearbeiten (schrauben, nageln, bohren, schlitzen) läßt, ist sehr anpassungsfähig und kann für die verschiedensten Zwecke verwendet werden. Der Körper kann mit einem Permanentmagneten oder einer Abschlußkappe versehen werden. Für den Körper ist Kork, und zwar sowohl Naturkork als auch Preßkork, wegen seiner mechanischen Festigkeit und Elastizität besonders gut geeignet. Kork ist außerdem wärme-und kälteisolierend sowie wasserabweisend. Eine Verwendung ist daher auch im Außenbereich möglich.

Die Verwendung des Grundelements und seiner Modifikationen ist im Preß-und Steckverfahren in Verbindung mit Holz-und Eisenstäben, Kunststoffdübeln, Kunststoff-und Metallrohren (Alurohren), Kordeln, Druckknöpfen usw. für die verschiedensten Zwecke verwendbar. Aufgrund seiner guten Eigenschaften läßt es sich auch auf die verschiedenste Weise befestigen, z. B. durch An-und Verkleben, durch Anschrauben des Korkkörpers, durch Stecken auf einen Stab mittels eines im Körper gebildeten Loches, wobei Eisen-oder Holzrundstäbe als Halterung in Holz und an Mauerwerk (ohne zusätzliche Dübel oder Schrauben) Verwendung finden können. Die Befestigung ist ferner durch Kunststoffdübel, durch Klettverschluß, durch Klebeband, durch ein Druckknopfelement oder einen Permanentmagneten, die an einer äußeren Stirnfläche des Körpers befestigt sind, usw. möglich.

Als Verwendungsmöglichkeiten seien beispielsweise erwähnt: In Kombination mit einem Magnet als Aufhänger für Metallflächen, zum Eindrücken von Reißnägeln, zur Dachpappen-Nagelung; mit zusätzlicher Bohrung oben oder seitlich oder zusätzlichen Schlitzen als Halterungselement für Baustellenbüros usw.; als Flaschenverschluß, auch mit Aufhängehaken; als Werkzeuggriff, z. B. für eine Vorstechahle, einen Bohrer, einen Schraubenzieher usw.; als Griff für Türen,. Schubladen, Kunststoffwannen; als Stoßfänger für Türen; als Fächerhalterung für Schränke, Schreibtische oder zwischen Mauerwerk; mit Querbohrung als Halterung für Vorhangstangen, Handtücher, Werkzeuge, Toilettenpapier, besonders geeignet auch für Heizkörperverkleidungen, im Bad für Stangen zum Trocknen von Wäsche; als Füße für Holzplatten, Blechböden, Kunststoffwannen, Spiegel, Unterlagsplatten für's Büro, gegebenenfalls auch mit Rädern kombiniert; als Wandbefestigung für Metall-oder Holzregale, als Einzelaufhängung auch für schwere Gegenstände und Formteile; zur Lochkennzeichnung mit Holz-oder Eisenrohr und Wasserwaage; als Halterung mit Kordel für Schirme, Stöcke und dergl., z. B. in Fahrzeugen, zum Aufstecken auf die Spitze von Schirmen oder Spazierstöcken zur Verringerung der Rutschgefahr und zur Lärmminderung; in Kombination mit einem Magneten zur Befestigung von Stangen, Notflaggen, Speisekarten, Wärmetafeln, Bilder, abzulesende Schriftstücke usw.; als "Gummihammerzusatz" für einen Eisenhammer; als Griff für Scheiben, z. B. zur Halterung von Schleif-und Polierpapier; als Behälter (Geheimfach zwischen dem Körper und dem geschlossenen Ende des Mantels); als Gürtel-oderKrawattenhalter mit Ring aus Holz oder Metall; als Zeitungshalter für die Wand; als wärme-oder kälteisolierender Griff; als Korkstempel; als Halter für Preis-oder Reservierungsschilder, ggf. mit Magnet oder Beschwerungseinlage; als Halterung an Wänden, Schränken, Stühlen, Tischen auch in Fahrzeugen, für Gegenstände aller Art, z. B. Kleiderbügel, Taschen, Mappen, Tragbeutel, für Werkzeuge, Geräte usw.; als Tubenverschluß; als Halterung für Grenzabstandsstangen; als Schlüsselgriff; als Griff mit Tampon zum Auftragen von Fett, Kleber, Salben usw.; als Schwimmkörper, als Kinderspielzeug, als Tragegriff für Kunststoffbeutel, Handtaschen, Schirme, Getränkekästen, Kartons, Kisten usw.; zur Halterung und Lagerung von Ski; als zylindrischer Kleinstbehälter für Kleinstutensilien u.a.m.

Im folgenden werden Ausführungsbeispiele der Erfindung unter Bezugnahme auf die Zeichnung näher erläutert. Es zeigen:

Fig. 1 einen Axialschnitt einer prinzipiellen Ausführungsform "Grundelement") des erfindungsgemäßen Griff-und Halterungselements;

Fig. 1a eine erste Ausführungsform eines erfindungsgemäßen Halterungselements, das an einer Schublade oder dergleichen angebracht ist;

Fig. 2 ein Halterungselement mit einem eingelassenen Haftmagneten;

Fig. 3 ein Halterungselement mit einem lösbar angebrachten Haftmagneten;

Fig. 4 ein Halterungselement mit Haftmagneten und Aufhängehaken;

Fig. 5 ein Halterungselement, das als Flaschenverschluß verwendet werden kann;

Fig. 6, Fig. 7a und 7b sowie Fig. 8 bis 14 weitere Ausführungsbeispiele der Erfindung.

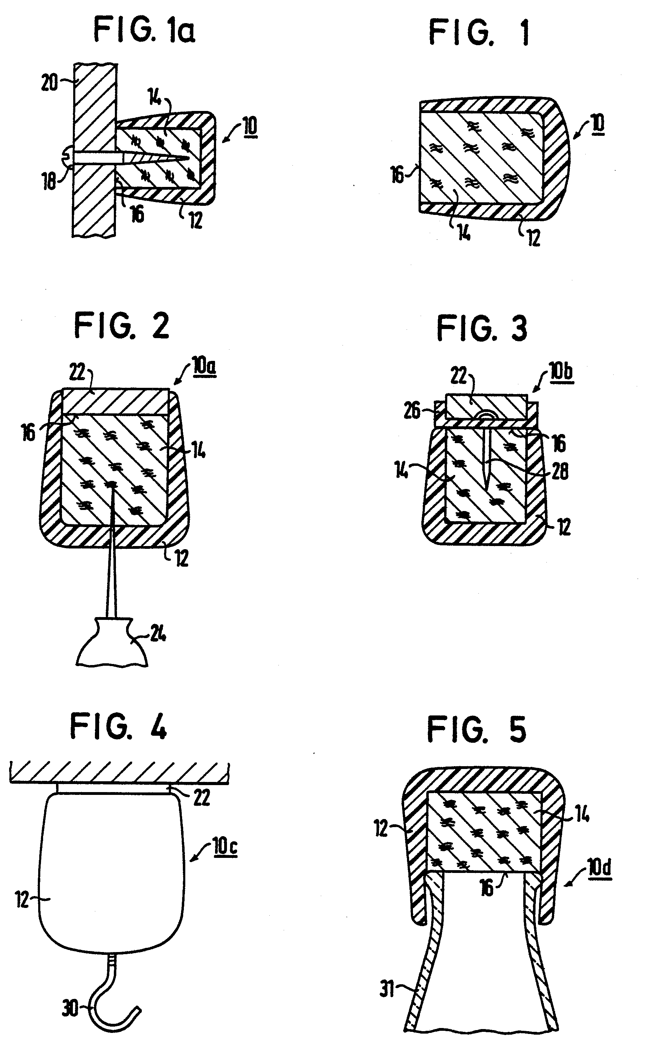

Wie Fig. 1 zeigt, besteht ein Halterungselement gemäß der Erfindung im wesentlichen aus einemeinseitig geschlossenen, hütchenförmigen Mantel 12 aus biegsamem und etwas elastischem Kunststoff, wie z. B. Weich-PVC. Als Mantel können z. B. übliche Kunststoffkappen für Metallrohr-Möbelfüße verwendet werden. In das Innere des Mantels 12 ist ein im wesentlichen zylindrischer Körper 14 aus Kork im Preßsitz eingesetzt. Der Körper 14 kann in den Mantel 12 auch eingeklebt sein und er kann auch aus einem anderen Material als Kork bestehen, das eine ähnliche Konsistenz hat, z. B. Hart-Kunststoffschaum. Kork, und zwar sowohl Naturkork als auch Preßkork, ist jedoch wegen seiner mechanischen Festigkeit und Elastizität für den vorliegenden Zweck besonders gut geeignet. Bei dem "Grundelement" gemäß Figur 1 schließt die äußere Stirnfläche 16 des Körpers 14 bündig mit dem offenen Ende des Mantels 12 ab. Dieses "Grundelement" gemäß Fig. 1 läßt sich in der verschiedensten Weise verwenden, gegebenenfalls mit geringen, auch vom Nicht-Fachmann leicht auszuführenden Modifikationen, wie im folgenden erläutert werden soll.

Das Halterungselement gemäß Figur 1 kann z. B. als Griff dienen und, wie Fig. 1a zeigt, mittels einer Holzschraube 18 an einer Schublade oder dergleichen befestigt werden, von der in Figur 1a nur ein Teil der Vorderwand 20 dargestellt ist.

In entsprechender Weise kann das Halterungselement 10 gemäß Figur 1 auch als Griff für eine Feile oder ein ähnlich gehaltertes Werkzeug verwendet werden.

Das Halterungselement gemäß Fig. 2 unterscheidet sich von dem Grundelement gemäß Figur 1 in erster Linie dadurch, daß die Stirnfläche 16 des Körpers 14 vertieft angeordnet ist (was z. B. durch Abschneiden des Körpers des Grundelements erreicht werden kann) und daß in der dadurch gebildeten Mulde am offenen Ende des Mantels 12 ein scheibenförmiger Permanentmagnet 22 angeordnet ist. Der Magnet 22 kann im Preßsitz in das offene Ende des Mantels 12 eingesetzt sein, er kann jedoch stattdessen oder zusätzlich auch mit der Stirnfläche 16 des Körpers 14 verklebt sein. Das Halterungselement gemäß Fig. 2 kann beispielsweise zur Halterung eines Werkzeuges, wie eines Stichels 24 dienen, dessen Dorn einfach in den Boden des Mantels 12 gestochen wird, so daß der Stichel dann bei Nichtgebrauch mittels des Halterungselements 10a gemäß Fig. 2 an einer Eisenfläche, z. B. einem an einem Ablage angebrachten Eisenplättchen, abgelegt werden kann.

Figur 3 zeigt als weitere Ausgestaltung des Grundelements gemäß Fig. 1 ein Halterungselement 10b, bei dem die Stirnfläche 16 des Körpers 14 wie bei Fig. 1 mit dem Rand der Öffnung des Mantels 12 bündig ist. Am Körper 14 ist ein - scheibenförmiger Permanentmagnet 22 mittels einer lösbaren Halterung angebracht, welche eine flache Schale 26 , in der der scheibenförmige Permanentmagnet 22 durch Kleben oder Einpressen befestigt ist und einen nagelartigen Dorn 28, den den Boden der Schale 26 durchsetzt und in den Körper 14 eingedrückt ist, enthält.

Fig. 4 zeigt ein Halterungselement 10c, das sich aus dem Halterungselement 10a gemäß Fig. 2 dadurch ergibt, daß ein Schraubhaken 30 durch das geschlossene Ende des Mantels 12 in den in Fig. 4 nicht sichtbaren Körper 14 eingeschraubt ist. Das Halterungselement 10c kann zum Aufhängen irgendwelcher Gegenstände an einer Eisenfläche verwendet werden. Der Haken kann auch radial in den Körper eingeschraubt sein und es können mehrere Haken vorgesehen sein.

Fig. 5 zeigt ein Halterungselement 10d, bei dem die Stirnfläche 16 des Körpers 14 vertieft angeordnet und der Mantel 12 so bemessen ist, daß das Element auf dem Hals einer Flasche 31 festgeklemmt werden kann. Der Mantel 12 wird in diesem Falle aus einem lebensmittelverträglichen Kunststoff hergestellt und so bemessen, daß sein Innendurchmesser etwas geringer ist als der üblicherweise genormte Außendurchmesser der zu verschließenden Flaschen.

Es dürfte einleuchten, daß das vorliegende Halterungselement auch noch für viele weitere Zwecke mit Vorteil verwendet werden kann. Der Mantel 12 kann eine zylindrische Außen-und Innenfläche sowie einen ebenen Boden haben, oder er kann auch nur einen zylindrischen Innenraum aufweisen und außen etwas tonnenförmig gewölbt sein und einen nach außen gewölbten Boden aufweisen, wie es in den Zeichnungen dargestellt ist.

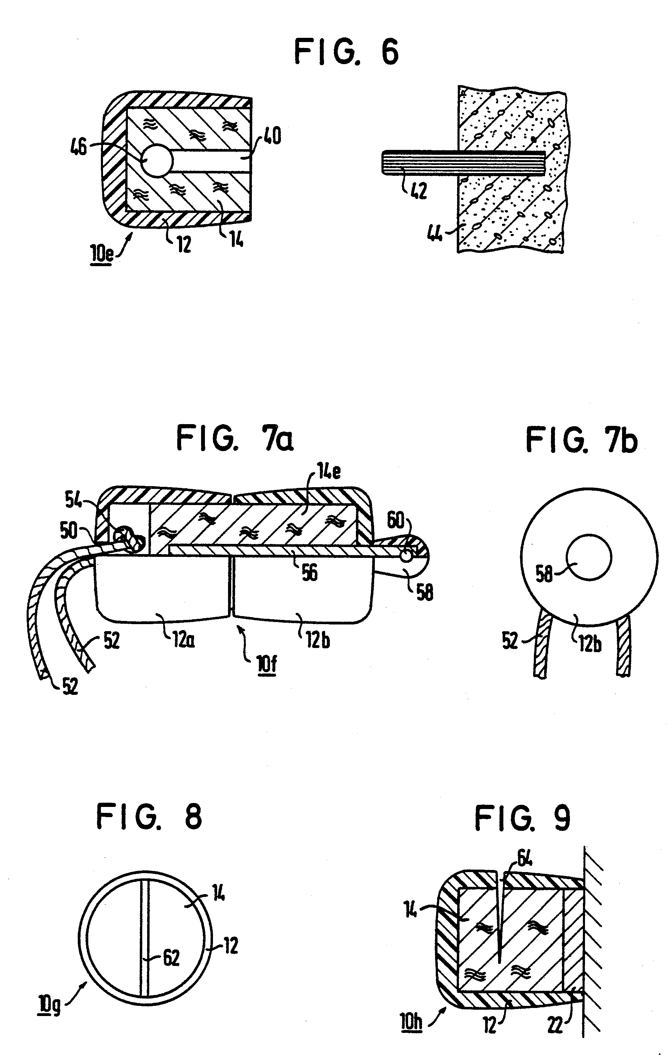

In Fig. 6 ist als weitere Abwandlung des Grundelements der Erfindung ein Halterungselement 10e dargestellt, dessen z. B. aus Preßkork bestehender Körper 14 mit einem axialen Loch 40 versehen ist, mit dem das Halterungselement 10d auf einen Dübel 42 gesteckt werden kann, der aus einer Betonwand 44 herausragt. Das auf den Dübel 42 aufgesteckte Halterungselement 10e kann zum Aufhängen von Gegenständen dienen. Das Halterungselement 10e kann auch ein radiales Loch 46 aufweisen, so daß mit zwei solchen Halterungselementen ein nicht dargestellter, durch die betreffenden Löcher 46 gesteckter Stab abnehmbar an einer Wand, einer Türe oder dergleichen befestigt werden kann. Der Stab kann dann als Vorhangstange, Krawattenhalter und dergleichen dienen.

In das Loch 40 im Boden des Halterungselements 10e gemäß Fig. 6 kann die Spitze eines Spazierstockes oder Regenschirms gesteckt und im Kork-Körper 14 verankert werden, so daß der Stock oder Schirm auch auf glattem Boden ohne Gefahr des Ausrutschens oder der Beschädigung des Bodens benutzt werden kann.

Fig. 7a zeigt eine in der oberen Hälfte axial geschnittene Seitenansicht und Fig. 7b eine Stirnansicht einer weiteren Abwandlung des Halterungselements gemäß der Erfindung. Das Halterungselement 10f hat einen relativ langen, zylindrischen Körper 14e aus Kork, auf dessen entgegengesetzte Enden zwei Mantelelemente oder Kappen 12a, 12b aus Weich-PVC oder dergleichen aufgesteckt sind. Die Kappe 12a hat an ihrer Stirnseite ein Loch 50, durch das die Enden einer hat an ihrer Schnurschlaufe 52 gesteckt sind. Die Enden der Schnurschlaufe 52 sind im Inneren der Kappe 12a bei 54 verknotet. Die Kappe 12b und der Körper 14e haben ein axiales Loch, in das ein Dübel oder Holzstab 56 gesteckt ist, dessen eines Ende aus der Stirnseite der Kappe 12b herausragt und dort mit einer ähnlichen, kleineren Kappe 58 aus Weich-PVC oder dergleichen versehen ist. Die Kappe 58 und der Holzstab 56 weisen ein radiales Loch 60 auf, durch das die Schnurschlaufe 52 geht, wie Fig. 7b zeigt. Der Außendurchmesser des Körpers 14e ist etwas größer als der Innendurchmesser der Kappen 12a, 12b, so daß die Kappen fest, jedoch noch ohne Schwierigkeiten abziehbar, auf dem Körper 14e sitzen. Entsprechendes gilt für den Holzstab 56, so daß dieser zwar sicher in dem axialen Loch des Körpers 14e sitzt, aber andererseits auch mühelos aus diesem herausgezogen werden kann. Das Griffelement 10f mit der Schnurschlaufe 52 kann als Tragegriff für Skistiefel, Skier, Pakete oder dergleichen dienen. Man zieht entweder den Stab 56 heraus, oder man zieht die Kappe 12a vom Körper 14e heraus und steckt dann die nun offene doppelte Schnurschlaufe durch die Schnallen der Skischuhe oder die Skibindung, stellt dann den in Fig. 7a dargestellten Zustand wieder her und kann dann die Last, an dem das Halterungselement 10f angebracht ist, bequem tragen, da die Kappen 12a, 12b mit dem Korkkörper 14e einen bequemen Griff bilden.

Wie die Stirnansicht des offenen Endes des Mantels 12 des Halterungselementes 10g in Fig. 8 zeigt, kann das Grundelement gemäß Fig. 1 dadurch modifiziert werden, daß man in der frei liegenden Stirnseite des aus Kork bestehenden Körpers 14 einen radialen Schlitz 62 bildet, in den z. B. ein flacher Griff eines Schlüssels wie eines Sicherheitsschlüssels oder Autoschlüssels, gesteckt werden kann.

Fig. 9 zeigt ein modifiziertes Halterungselement 10h ähnlich dem Halterungselement 10a in Fig. 2, das einen eingepreßten Permanentmagneten 22 aufweist, so daß es an einer Eisenfläche befestigt werden kann. Das Halterungselement 10h hat einen sich von einer Seite nach innen erstreckenden keilförmigen, kerbenartigen Schlitz 64, in den eine Karte oder irgendein anderer flacher Gegenstand gesteckt werden kann.

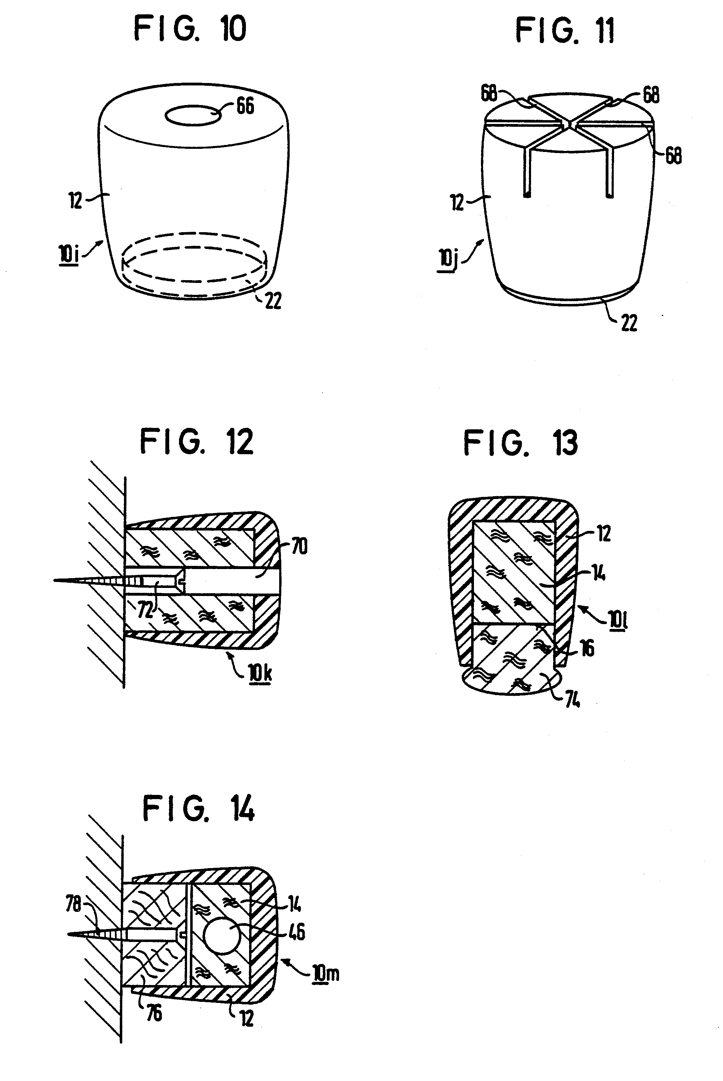

Das in Fig. 10 dargestellte modifizierte Halterungselement 10i hat ein durch die Stirnseite des Mantels 12 nach innen reichendes zylindrisches Loch 66, in das Bleistift, Kugelschreiber oder dergleichen gesteckt werden kann. Das Halterungselement 10i kann wie das Halterungselement 10a einen Permanentmagneten 22 oder nur einfach einen zur Beschwerung dienenden scheibenförmigen Metallkörper enthalten.

Das modifizierte Halterungselement 10j, das in Fig. 11 dargestellt ist, hat an der geschlossenen Seite des Mantels 12 einen, oder wie dargestellt, drei sternförmig angeordnete diametrale Schlitze 68 und kann z. B. als Tischkartenhalter, Preisschildchenhalter und dergleichen dienen. Im übrigen kann es wie das Halterungselement 10a gemäß Fig. 2 oder 10b gemäß Fig. 3 ausgebildet sein.

Das modifizierte Halterungselement 10k gemäß Fig. 12 hat ein durchgehendes axiales Loch 70 und kann als Führung für eine Holzschraube 72 dienen, die in eine Wand oder dergleichen einzuschrauben ist. Wenn die Holzschraube 72 im eingschraubten Zustand noch ein Stück aus der Wand herausragt, wie es in Fig. 12 dargestellt ist, kann das Halterungselement 10k auf die Holzschraube aufgesteckt werden und als Halterung zum Aufhängen von Gegenständen oder dergleichen dienen.

Das modifizierte Halterungselement 10l gemäß Fig. 13 hat einen Körper 14, der den Mantel 12 nicht ganz ausfüllt, so daß angrenzend an das offene Ende des Mantels 12 ein Hohlraum verbleibt, in den ein Tampon 74 aus Filz, Watte oder dergleichen auswechselbar eingesetzt werden kann. Das Halterungselement 10l eignet sich zum Auftragen von Salben und dergleichen.

Fig. 14 zeigt ein modifiziertes Halterungselement 10m, das wie das Halterungselement 10m einen verkürzten Körper 14 aufweist und mit dem unausgefüllten Ende des Mantels 12 im Preßsitz auf einen zylindrischen Zapfen 76 aus Holz aufgesteckt ist, der mit einer Holzschraube 78 an einer Wand befestigt ist. Das Halterungselement 10m kann beispielsweise ein radiales Loch 46 (oder einen Haken 30 wie bei Fig. 4 oder eine Kerbe 64 wie bei Fig. 9 usw.) aufweisen und zur Halterung aller möglichen Utensilien dienen. Wenn das betreffende Utensil durch eine Schnurschlaufe, die durch das Loch 46 führt, an dem Halterungselement 10m befestigt ist, kann es durch Aufstecken des Halterungselements 10m auf den Holzzapfen 76 bequem an der Wand aufgehängt und durch Abziehen des Halterungselements 10m leicht wieder entfernt werden.

An der Stirnfläche 16 kann auch ein Druckknopf-Element befestigt, z. B. angeklebt werden.

Wenn das Loch 46, 70 nicht erwünscht ist oder zu groß gebohrt wurde, kann ein passender konischer Korken eingesetzt oder eingeklebt werden und man kann dann gegebenenfalls ein neues engeres Loch bohren.

## Ansprüche

1. Halterungselement **gekennzeichnet durch** einen rohrförmigen, einseitig geschlossenen Mantel (12) aus Weich-Kunststoff und einem in Inneren des Mantels angeordneten Körper (14) aus Kork oder Hartschaumstoff oder einem anderen Material, das ähnliche mechanische Eigenschaften hat wie Kork.

2. Halterungselement nach Anspruch 1, **dadurch gekennzeichnet**, daß die dem geschlossenen Ende des Mantels (12) abgewandte Stirnfläche (16) des Körpers mit dem Rand der Öffnung des Mantels im wesentlichen bündig abschließt (Figur 1).

3. Halterungselement nach Anspruch 1, **dadurch gekennzeichnet**, daß die dem geschlossenen Ende des Mantels (12) abgewandte Stirnfläche (16) des Körpers (14) vertieft im Abstand vom Rand der Öffnung des mantels (12) angeordnet ist (Figur 2 und 5).

4. Halterungselement nach Anspruch 2 oder 3, **dadurch gekennzeichnet**, daß an der öffnungsseitigen Stirnfläche (16) des Körpers (14) ein - scheibenförmiger Permanentmagnet (22) angeordnet ist (Fig. 2 und 3).

5. Halterungselement nach Anspruch 4, **dadurch gekennzeichnet**, daß in den Boden des Mantels ein Haken (30) oder eine Öse eingeschraubt ist.

6. Halterungselement nach Anspruch 3, **dadurch gekennzeichnet**, daß der Mantel (12) und der Körper (14) aus einem lebensmittelverträglichen Material bestehen und daß der Innendurchmesser des Mantels (12) so bemessen ist, daß der Mantel im Preßsitz auf einen Flaschenhals genormten Durchmessers aufsetzbar ist (Figur 5).

7. Halterungselement nach Anspruch 1, **dadurch gekennzeichnet**, daß der Körper (14) ein axiales und/oder ein radiales Loch (40, 46) aufweist.

8. Halterungselement nach Anspruch 1, **dadurch gekennzeichnet**, daß der Körper (14e) über das offene Ende des Mantels (12a) hinausreicht, daß auf dem hinausreichenden Stück des Körpers (14e) ein zweiter, rohrförmiger, einseitig geschlossener Mantel (12b) angeordnet ist; daß die Stirnseite des einen, kappenförmigen Mantels (12a) ein Loch (50) aufweist, durch das eine im Inneren dieses Mantels (12a) fixierte Schnurschlaufe (52) geführt ist; daß die andere Kappe und der Körper (14e) axiale Löcher aufweisen, in die ein stabförmiges Bauteil (56) eingesetzt ist, dessen aus dem zweiten Mantel (12b) herausragendes Ende ein Loch (60) aufweist, durch das die Schnurschlaufe (52) geführt ist.

9. Halterungselement nach Anspruch 3, **dadurch gekennzeichnet**, daß anschliessend an die vertiefte Stirnfläche (16) des Körpers (14) ein tamponartiger Körper (74) im Mantel (12) angeordnet ist.

10. Halterungselement nach Anspruch 3, **dadurch gekennzeichnet**, daß das offene Ende des Mantels (12) im Preßsitz auf einen an einer Fläche befestigten zylindrischen Körper (76) im Preßsitz aufgesteckt ist.

## FIG. 1a

20
14
18
16
10
12

## FIG. 1

16
14
12
10

## FIG. 2

22
16
14
12
10a
24

## FIG. 3

22
26
16
14
28
12
10b

## FIG. 4

22
12
10c
30

## FIG. 5

14
12
16
10d
31

# FIG. 6

10e  46  12  14  40  42  44

# FIG. 7a

54  14e  50  60  52  52  56  58  12a  10f  12b

# FIG. 7b

58  52  12b

# FIG. 8

14  62  12  10g

# FIG. 9

64  14  12  22  10h

FIG. 10

FIG. 11

66

12

10i

22

68    68

68

12

10j

22

FIG. 12

FIG. 13

70

72

10k

12

14

10l

16

74

FIG. 14

78

14

46

10m

76

12